# EUROPEAN PATENT SPECIFICATION

(11) **EP 3 116 704 B1**
(45) Date of publication and mention of the grant of the patent: **19.02.2020**
(21) Application number: 14819099.4
(22) Date of filing: 10.10.2014
(51) Int. Cl.: B29C 65/20, B29C 65/78, B29C 65/30, B29K 27/06

(54) **BURR-FREE PVC PROFILE CORNER WELDING MACHINE**
SCHWEISSMASCHINE FÜR GRATFREIE PVC-PROFILECKEN
MACHINE À SOUDER SANS BAVURE POUR PROFILÉS D'ANGLE EN PVC

(30) Priority: 12.03.2014 TR 201402915
(43) Date of publication of application: 18.01.2017
(73) Proprietor: Kaban, Salim, 34555 Istanbul (TR)
(72) Inventor: Kaban, Salim, 34555 Istanbul (TR)
(74) Representative: Carangelo, Pierluigi
(86) International application number: PCT/TR2014/000376
(87) International publication number: WO 2015/137893

(56) References cited:
- EP-A2- 2 067 605
- WO-A1-2013/132406

## Description

### TECHNICAL FIELD

This invention relates to burr-free PVC profile corner welding machine used for welding PVC profiles.

### PRIOR ART

When prior art is examined, it is seen that technique most commonly used in welding operation is fusion welding performed with the aid of a flat resistance plate. Although PVC welding machines are manufactured both nationally and globally, no positive step has been taken for preventing burr formation during welding operation.

In current technique, resistance is heated up to approximately 250°C, positions of PVC profiles are determined via stable abutment plates prior to welding, afterwards, PVC profiles to be combined are contacted to both resistance beds at the same time and they are melted as much as 3 mm after the formation of sufficient melted area, PVC profiles are welded, in that combined, by pressing towards each other with a determined force. In this method plastic material in the melted area overflows the combination planes and generates burr by getting cold. These generated burrs are to be cleaned with a separate process. This causes extra cost as it creates machine, time and qualified personnel need for cleaning process. Moreover, traces of cutting tools stay in place of burrs having been removed as an inevitable result of the cleaning method. After PVC profiles are cut in cutting machines in desired lengths, they are turned into frames by being combined with the current method disclosed above.

In EPO patent application numbered EP2255942, profile welding and burring method is disclosed. The invention relates to profiles having been exposed to welding and burring operation and methods related therewith. The related method is used for turning of plastic bottomed profiles with the frame. In the machine used butt-welding is done for frame corner combining and any burrs arising from this merging operation can be cleaned. Blades are used for cutting corners joints of such profiles with the aim of removing burrs. Blades are created to cover all visible welding burrs.

In WIPO application numbered WO201111707, a device and methods used for welding profile pieces are mentioned. The device gas at least one welding head and can be positioned within a target welding position pre-determinable or predetermined depending on another welding head and/or a holding device. Welding head (1) and/or a piece of the welding head (1) of the invention requires at least one heating member as heating plate. Melting of profile pieces has been performed in accordance with at least one dimensional variability of at least one of the profile pieces of target length within the a positional tolerance range (5) around positionable and/or movable welding position (6).

In the prior art, EP 2 067 605 A2 describes systems and methods for the manufacture of windows. More specifically, it discloses systems and methods used for efficient production and improved processes for window systems, vinyl gates and other products manufactured from polymeric components. According to the description; a method of welding a window frame provides a welding system having movable head fixtures. Certain of the head fixtures include cutting structure and each head fixture includes heat supplying structure. A one-piece lineal has first and second ends and notches therein. The lineal is loaded with respect to the head fixtures, with portions of the lineal being folded about the notches to define folded corners. Head fixtures are moved to clamp on the lineal. The cutting structure cuts the lineal generally at each notch to separate each of the folded corners from the lineal, with each corner of the lineal being defined by a pair of ends. The head fixtures are repositioned so as to provide a space between each pair of ends. A heat supplying structure is inserted into the space to heat each pair of ends and then removed. The head fixtures are moved so that each pair of ends contact and join in a thermally welded manner.

WO 2013/132406 A1 discloses a burr-free PVC profile corner welding machine comprising:
- an abutment group,
- two movable plates enabling the positioning and movements of the PVC profiles,
- two upper compressing groups and compressing tools enabling the compressing of the PVC profiles from above and the fixation thereof on the movable plates,
- a milling cutter group comprising a cutting edge connector shaft, a cutting edge, a bedding member, a main body, a movement transmitter means and a first motor enabling the treating of the edge of the profiles with cutting tools prior to welding process,
- a horizontal channeled resistance enabling the enhancement of welding resistance and prevention of burr formation,
- a movement system enabling the movements of the at least two movable plates,
- movement elements enabling the reciprocation of the abutment group, the milling cutter group and the horizontal channeled resistance, and
- a movement member enabling up-down movement of the milling cutter group.

### SUMMARY OF THE INVENTION

The aim of this invention is the prevention of burr formation requiring cleaning after welding operation.

Another aim of the invention is that the burr-free welding method can be used in one corner, two corner and four corner welding machines.

Another aim of the invention is that errors on profile dimensions can be tolerated.

Another aim of the invention is that welding planes of the profiles is treating with cutting tools.

### DETAILED DESCRIPTION OF THE INVENTION

"Burr-free PVC Profile Corner Welding Machine" realized to reach the aim of the invention is shown in accompanying figures in which:

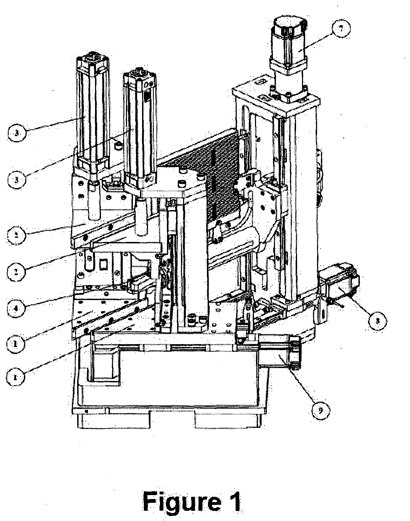

**Figure 1****-** General view of the invention.

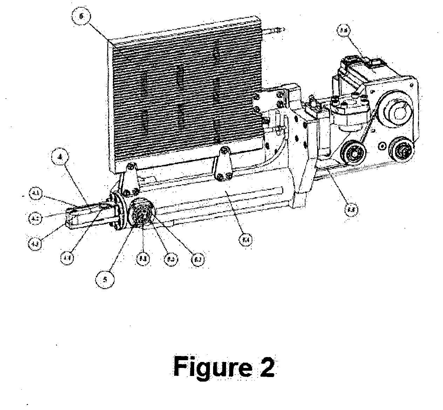

**Figure 2****-** Detailed view of the invention.

Pieces seen in the figures are separately numbered and the pieces corresponding to these numbers are as follows:
1. Movable plate
2. Upper compressing group
3. Compressing rolls
4. Abutment group
   4.1. Abutment group main body
   4.2. Spring
   4.3. Bearing
   4.4. Spacer
5. Milling cutter group
   5.1. Cutting edge connector shaft
   5.2. Cutting edge
   5.3. Bedding member (roller)
   5.4. Main body
   5.5. Movement transmitter belt
   5.6. Number 1 servo motor
6. Horizontal channeled resistance
7. Number 2 servo motor
8. Number 3 servo motor
9. Number 4 servo motor

Basically, the invention comprises:
- the movable plate (1) enabling the positioning and movements of the PVC profiles and leaning thereof on the abutment group,
- at least two upper compressing groups (2) and compressing rolls (3) enabling the compressing of the PVC profiles from above and the fixation thereof on the movable plate (1),
- the abutment group (4) comprising the abutment group main body (4.1), the spring (4.2), the bearing (4.3) and the spacer (4.4) enabling the tolerance of errors on the profile dimensions,
- the milling cutter group (5) comprising the cutting edge connector shaft (5.1), the cutting edge (5.2), the bedding member (5.3), the main body (5.4), the movement transmitter belt (5.5) and the number 1 servo motor (5.6) enabling the treating of the welding planes of the profiles with cutting tools prior to welding process,
- number 4 servo motor (9) enabling the movements of at least two movable plates (1),
- number 3 servo motor (8) enabling the reciprocation of the abutment group (4), the milling cutter group (5) and the horizontal channeled resistance (6),
- the horizontal channeled resistance (6) enabling the enhancement of welding resistance and prevention of burr formation,
- number 2 servo motor (7) enabling up-down movement of the abutment group (4), the milling cutter group (5) and the horizontal channeled resistance (6).

The operation principle of the invention is as follows:
Firstly, the PVC profiles to be boiled are exposed to cutting operation with an angle of 45° in required dimensions in cutting machines.Cut PVC profiles are places on the movable plates (1) and leant on the abutment group (4). Afterwards, upper compressing groups (2) compresses the PVC profiles from above via the compressing rolls (3), thereby fixing the positioned profiles on the movable plates (1). The up-down movement of the abutment group (4), the milling cutter group (5) and the horizontal channeled resistance (6) is enabled with the number 2 servo motor (7). The movable plates (1) move via the number 4 servo motor (9). The movable plates (1) then get a proper position so that they can open outwardly with the PVC profiles fixed thereon, thereby enabling the operation of the milling cutter group (5). Afterwards, the milling cutter group (5) treats the welding planes of the PVC profiles in desired measurements so that no burrs are formed after the welding. The movement of the cutting groups (5.2) within the milling cutter group (5) is enabled by the number 1 servo motor (5.6) via the movement transmitter belt (5.5) passing through the main body (5.4). After treatment process of the profile planes is completed, the horizontal channeled resistance (6) is positioned by going among the treated profiles. Then the profiles positions on the movable plates (1) are contacted to both planes of the horizontal channeled resistance (6) and they are melted in sufficient amount. The temperature of the horizontal channeled resistance (6) is about 200-250°C. Afterwards, the PVC profiles of which plane has been melted via the movable plates (1) are retracted and the horizontal channeled resistance (6) leaves. After this stage, the PVC profiles are again pressed towards each other with the movable plates (1) and the welding operation is performed. After the PVC profiles have been boiled, the upper compressing groups (2) move up and the profiles melted to each other are released and the welding operation is terminated. The reciprocation of the abutment group (4), the milling cutter group (5) and the horizontal channeled resistance (6) is enabled by the number 3 servo motor (8).

The technique of the invention can be applied in one corner, two corner and four corner welding machines.

A variety of applications of the invention can be improved and the invention cannot be limited to examples disclosed herein, it is as indicated in the claims.

## Claims

1. Basically burr-free PVC profile corner welding machine comprising:
- an abutment group (4) comprising an abutment group main body (4.1), a spring (4.2), a bearing (4.3) and a spacer (4.4) enabling the tolerance of errors on the profile dimensions,
- at least two movable plates (1) enabling the positioning and movements of the PVC profiles and leaning thereof on the abutment group,
- at least two upper compressing groups (2) and compressing rolls (3) enabling the compressing of the PVC profiles from above and the fixation thereof on the movable plates (1),
- a milling cutter group (5) comprising a cutting edge connector shaft (5.1), a cutting edge (5.2), a bedding member (5.3), a main body (5.4), a movement transmitter belt (5.5) and a number 1 servo motor (5.6) enabling the treating of the welding planes of the profiles with cutting tools prior to welding process,
- a horizontal channeled resistance (6) enabling the enhancement of welding resistance and prevention of burr formation,
- a number 4 servo motor (9) enabling the movements of the at least two movable plates (1),
- a number 3 servo motor (8) enabling the reciprocation of the abutment group (4), the milling cutter group (5) and the horizontal channeled resistance (6), and
- a number 2 servo motor (7) enabling up-down movement of the abutment group (4), the milling cutter group (5) and the horizontal channeled resistance (6).

2. A burr-free PVC profile corner welding machine according to Claim 1 **characterized in that** it is applicable in one corner, two corners and four corners welding machine.

3. A burr-free PVC profile corner welding machine according to Claim 1 or 2 **characterized in that** the at least two movable plates (1) open outwardly with the PVC profiles fixed thereon to enable the positioning of the milling cutter group (5) to operate.

4. A burr-free PVC profile corner welding machine according to any of the claims above **characterized by** the number 1 servo motor (5.6) enabling that the movement of the cutting groups (5.2) within the milling cutter group (5) via the movement transmitter belt (5.5) by passing through the main body (5.4).

5. A burr-free PVC profile corner welding machine according to any of the claims above **characterized by** the at least two movable plates (1) enabling the retraction of PVC profiles of which plane has been melted and leaving of the horizontal channeled resistance (6) from the environment.

6. A burr-free PVC profile corner welding machine according to any of the claims above **characterized by** the at least two upper compressing group (2) enabling the release of the profiles melted into each other after the profiles are boiled and the termination of the welding operation.

## Patentansprüche

1. Weitgehend gratfreie PVC-Profil-Ecken-Schweißmaschine, die folgende Merkmale aufweist:
eine Anstoßgruppe (4), die einen Anstoßgruppe-Hauptkörper (4.1), eine Feder (4.2), ein Lager (4.3) und einen Abstandhalter (4.4) aufweist, der die Toleranz von Fehlern bezüglich den Profilabmessungen ermöglicht,
zumindest zwei bewegbare Platten (1), die das Positionieren und Bewegen der PVC-Profile und ein Neigen derselben auf der Anstoßgruppe ermöglichen,
zumindest zwei obere Verdichtungsgruppen (2) und Verdichtungswalzen (3), die das Verdichten der PVC-Profile von oben und das Befestigen derselben auf den bewegbaren Platten (1) ermöglichen,
eine Fräsergruppe (5), die eine Schneidkante-Verbindungswelle (5.1), eine Schneidkante (5.2), ein Einbettungsbauglied (5.3), einen Hauptkörper (5.4), einen Bewegungsübertragungsriemen (5.5) und einen Nummer-1-Servomotor (5.6) aufweist, der es ermöglicht, dass die Schweißebenen der Profile vor dem Schweißprozess mit Schneidwerkzeugen behandelt werden,
einen horizontalen gelenkten Widerstand (6), der es ermöglicht, den Schweißwiderstand zu verbessern und die Gratbildung zu verhindern,
einen Nummer-4-Servomotor (9), der die Bewegungen der zumindest zwei bewegbaren Platten (1) ermöglicht,
einen Nummer-3-Servomotor (8), der das Hin- und Herbewegen der Anstoßgruppe (4), der Fräsergruppe (5) und des horizontalen gelenkten Widerstands (6) ermöglicht, und
einen Nummer-2-Servomotor (7), der die Aufwärts- und Abwärtsbewegung der Anstoßgruppe (4), der Fräsergruppe (5) und des horizontalen gelenkten Widerstands (6) ermöglicht.

2. Eine gratfreie PVC-Profil-Ecken-Schweißmaschine gemäß Anspruch 1, **dadurch gekennzeichnet, dass** dieselbe bei Eine-Ecke-, Zwei-Ecken- oder Vier-Ecken-Schweißmaschinen angewendet werden kann.

3. Eine gratfreie PVC-Profil-Ecken-Schweißmaschine gemäß Anspruch 1 oder 2, **dadurch gekennzeichnet, dass** die zumindest zwei bewegbaren Platten (1) sich mit den darauf befestigten PVC-Profilen nach außen öffnen, um das Positionieren der Fräsergruppe (5) zum Arbeiten zu ermöglichen.

4. Eine gratfreie PVC-Profil-Ecken-Schweißmaschine gemäß einem der vorhergehenden Patentansprüche, **gekennzeichnet durch** den Nummer-1-Servomotor (5.6), der die Bewegung der Schneidgruppen (5.2) innerhalb der Fräsergruppe (5) über den Bewegungsübertragungsriemen (5.5) ermöglicht, der durch den Hauptkörper (5.4) hindurch verläuft.

5. Eine gratfreie PVC-Profil-Ecken-Schweißmaschine gemäß einem der vorhergehenden Ansprüche, **gekennzeichnet durch** die zumindest zwei bewegbaren Platten (1), die das Zurückziehen von PVC-Profilen, deren Ebene geschmolzen ist, und das Verlassen des horizontalen gelenkten Widerstands (6) aus der Umgebung ermöglichen.

6. Eine gratfreie PVC-Profil-Ecken-Schweißmaschine gemäß einem der vorhergehenden Ansprüche, **gekennzeichnet durch** die zumindest zwei oberen Verdichtungsgruppen (2), die es ermöglichen, dass die ineinander geschmolzenen Profile nach dem Kochen der Profile freigegeben werden und der Schweißvorgang beendet wird.

## Revendications

1. Machine à souder fondamentalement sans bavure pour profilés d'angle en PVC comprenant :
- un groupe de butée (4) comprenant un corps principal de groupe de butée (4.1), un ressort (4.2), un palier (4.3) et un écarteur (4.4) permettant la tolérance d'erreurs sur les dimensions de profilés,
- au moins deux plaques mobiles (1) permettant le positionnement et les déplacements des profilés en PVC et leur inclinaison sur le groupe de butée,
- au moins deux groupes de compression supérieurs (2) et rouleaux de compression (3) permettant la compression des profilés en PVC par le haut et leur fixation sur les plaques mobiles (1),
- un groupe de fraise (5) comprenant un arbre de connecteur de bord de coupe (5.1), un bord de coupe (5.2), un élément de couchage (5.3), un corps principal (5.4), une courroie de transmission de déplacement (5.5) et un servomoteur numéro 1 (5.6) permettant le traitement des plans de soudage des profilés avec des outils de coupe avant le processus de soudage,
- une résistance à canaux horizontale (6) permettant l'amélioration de la résistance au soudage et la prévention de la formation de bavures,
- un servomoteur numéro 4 (9) permettant les déplacements des au moins deux plaques mobiles (1),
- un servomoteur numéro 3 (8) permettant le mouvement de va-et-vient du groupe de butée (4), du groupe de fraise (5) et de la résistance à canaux horizontale (6), et
- un servomoteur numéro 2 (7) permettant un mouvement haut-bas du groupe de butée (4), du groupe de fraise (5) et de la résistance à canaux horizontale (6).

2. Machine à souder sans bavure pour profilés d'angle en PVC selon la revendication 1, **caractérisée en ce qu'**il est applicable dans une machine à souder pour un angle, deux angles et quatre angles.

3. Machine à souder sans bavure pour profilés d'angle en PVC selon la revendication 1 ou 2, **caractérisée en ce que** les au moins deux plaques mobiles (1) s'ouvrent vers l'extérieur avec les profilés en PVC fixés sur celles-ci pour permettre le positionnement du groupe de fraise (5) à actionner.

4. Machine à souder sans bavure pour profilés d'angle en PVC selon l'une quelconque des revendications ci-dessus **caractérisée par** le servomoteur numéro 1 (5.6) permettant que le déplacement des groupes de coupe (5.2) à l'intérieur du groupe de fraise (5) via la courroie de transmission de déplacement (5.5) par traversée du corps principal (5.4).

5. Machine à souder sans bavure pour profilés d'angle en PVC selon l'une quelconque des revendications ci-dessus **caractérisée par** les au moins deux plaques mobiles (1) permettant le retrait de profilés en PVC dont le plan a été fusionné et sortant de la résistance à canaux horizontale (6) de l'environnement.

6. Machine à souder sans bavure pour profilés d'angle en PVC selon l'une quelconque des revendications ci-dessus **caractérisée par** les au moins deux groupes de compression supérieurs (2) permettant la libération des profilés fusionnés l'un dans l'autre après que les profilés sont bouillis et la fin de l'opération de soudage.
